# FASCICULE DE BREVET EUROPEEN

(11) **EP 2 332 783 B1**
(45) Date de publication et mention de la délivrance du brevet: **05.11.2014**
(21) Numéro de dépôt: 10192476.9
(22) Date de dépôt: 24.11.2010
(51) Int. Cl.: B60R 11/02, F16B 21/09, H04R 1/02

(54) **Dispositif de fixation d'un équipement, à moyens d'immobilisation propres à s'auto-bloquer dans des ouvertures d'une paroi**
Ausrüstungsfixierungvorrichtung, mit Immobilisierungmitteln, die sich in den Öffnungen einer Wand Selbstverschließen.
Equipment fixation device, with immobilization means adapted to auto-lock itself in the openings of a wall.

(30) Priorité: 09.12.2009 FR 0958770
(43) Date de publication de la demande: 15.06.2011
(73) Titulaire: Peugeot Citroën Automobiles SA, 78140 Vélizy-Villacoublay (FR)
(72) Inventeur: Mauvais, Frédéric, 25150, AUTECHAUX-ROIDE (FR)
(74) Mandataire: Vigand, Régis Louis Michel

(56) Documents cités:
- EP-A1- 1 460 877
- WO-A1-2005/071271
- DE-A1-102008 008 432

## Description

L'invention concerne les dispositifs de fixation qui sont destinés à permettre la fixation d'un équipement sur une paroi.

Dans certaines situations, on est obligé d'utiliser un dispositif de fixation pour fixer un équipement sur une paroi. C'est notamment le cas lorsque l'on veut fixer un équipement de type haut-parleur sur une paroi de type doublure de porte de véhicule (éventuellement automobile).

La plupart des dispositifs de fixation précités sont solidarisés à leur paroi d'accueil au moyen de vis ou de rivets métalliques, ce qui nécessite plusieurs interventions d'un technicien au moyen d'un outil et donc induit non seulement un surcoût mais également une augmentation de poids (notamment lorsque plusieurs équipements (par exemple quatre) doivent être fixés sur des parois différentes. En outre, ce mode de solidarisation ne permet pas d'assurer une étanchéité de qualité au niveau des passages de vis ou de rivet.

Afin d'améliorer la situation, il a été proposé, notamment dans le document brevet FR 2908710, d'une part, de placer sur la face arrière de la doublure de porte des griffes de retenue en forme générale de L et présentant une protubérance interne au niveau de leur extrémité libre, et d'autre part, de définir dans la doublure de porte des ouvertures dans lesquelles sont introduites les pattes de fixation et qui sont délimitées chacune par un bord de paroi pourvu sur sa face arrière d'un moyen de blocage proéminent destiné à retenir la protubérance interne de la griffe de retenue correspondante. On obtient ainsi une espèce de retenue par clippage. Cette solution présente au moins deux inconvénients. En effet, elle nécessite la présence de moyens de blocage, rapportés ou définis par moulage, sur la face arrière de la doublure de porte, ce qui augmente son coût de fabrication, et, bien qu'assurant une bonne retenue suivant une direction axiale, elle n'assure pas une bonne retenue en rotation. En outre cette solution n'est pas entièrement satisfaisante en matière de robustesse.

Il est connu également du document WO2005/071271 un dispositif d'assemblage mais ne permettant pas d'assembler une pièce annulaire par trois moyens d'immobilisation à la fois axial et en rotation.

Le document EP 1 460 877 A1, figure 24, divulgue un dispositif selon le préambule de la revendication 1.

L'invention a pour but de proposer une solution alternative permettant d'améliorer la situation.

Elle propose à cet effet un dispositif conforme à la revendication 1.

Le dispositif de fixation selon l'invention peut comporter d'autres caractéristiques qui peuvent être prises en combinaison, et notamment :
- sa pièce de fixation peut comprendre trois moyens d'immobilisation placés sensiblement à 120° les uns des autres (mais il pourrait en comporter plus de trois) ;
   ➢ en variante, les moyens d'immobilisation peuvent être répartis de façon irrégulière (éventuellement pour assurer une fonction de détrompage) ;
      - chaque premier élément de blocage peut présenter une forme générale en L inversé de manière à définir avec la face arrière un espace de logement pour la partie choisie de la paroi (qui délimite l'ouverture correspondante) ;
      - chaque second élément de blocage peut être agencé sous la forme d'une patte comprenant une partie d'extrémité présentant une protubérance définissant une butée de blocage propre à s'appuyer sur le premier bord de paroi ;
   ➢ chaque patte peut être solidarisée à la face arrière de la pièce de fixation de façon flexible au moins suivant la direction axiale ;
      - il peut être agencé pour supporter un équipement qui constitue, par exemple et non limitativement, une partie au moins d'un haut-parleur;
      - il peut être agencé pour être solidarisé à une paroi qui constitue, par exemple et non limitativement, une doublure de porte de véhicule.

L'invention propose également une porte de véhicule comprenant une doublure de porte à laquelle est solidarisé un dispositif de fixation du type de celui présenté ci-avant.

Les avantages de l'invention apparaîtront à l'examen de la description détaillée ci-après, et des dessins annexés (obtenus en CAO/DAO), sur lesquels :
- les figures 1 et 2 illustrent schématiquement et respectivement, dans des vues en perspective côtés arrière et avant, un exemple de réalisation de dispositif de fixation selon l'invention,
- les figures 3 et 4 illustrent schématiquement, dans des vues en perspective côté avant, un exemple de doublure de porte au début et à la fin de la phase de solidarisation du dispositif de fixation des figures 1 et 2,
- la figure 5 illustre schématiquement, dans une vue en perspective côté arrière, la doublure de porte des figures 3 et 4 après introduction des premiers éléments de blocage du dispositif de fixation dans ses ouvertures,
- la figure 6 détaille schématiquement, dans une vue en perspective côté arrière, un premier élément de blocage du dispositif de fixation au début de son logement dans l'ouverture correspondante de la doublure de porte des figures 3 et 4,
- la figure 7 illustre schématiquement, dans une vue en perspective côté arrière, la doublure de porte des figures 3 et 4 une fois les moyens d'immobilisation du dispositif de fixation auto-bloqués dans ses ouvertures, et
- la figure 8 détaille schématiquement, dans une vue en perspective côté arrière, un moyen d'immobilisation du dispositif de fixation auto-bloqué dans l'ouverture correspondante de la doublure de porte des figures 3 et 4.

Les dessins annexés pourront non seulement servir à compléter l'invention, mais aussi contribuer à sa définition, le cas échéant.

L'invention a pour but d'offrir un dispositif (DF) destiné à permettre la fixation d'un équipement sur une paroi (DP).

Dans ce qui suit, on considère, à titre d'exemple non limitatif, d'une part, que l'équipement est un haut-parleur, et d'autre part, que la paroi (DP) est une doublure de porte de véhicule (éventuellement de type automobile, comme par exemple une voiture). Mais, l'invention n'est limitée ni à ce type d'équipement, ni à ce type de paroi. En effet, la paroi (DP) peut être une planche de bord ou une tablette (éventuellement arrière et/ou éventuellement rabattable), par exemple.

Par ailleurs, l'équipement à fixer pourrait être une partie d'un équipement plus complexe. En effet, on peut envisager que le dispositif (DF) fasse partie d'un équipement "complexe" et soit destiné à permettre la fixation d'une partie de cet équipement complexe, comme par exemple un tweeter (dans le cas d'un haut-parleur).

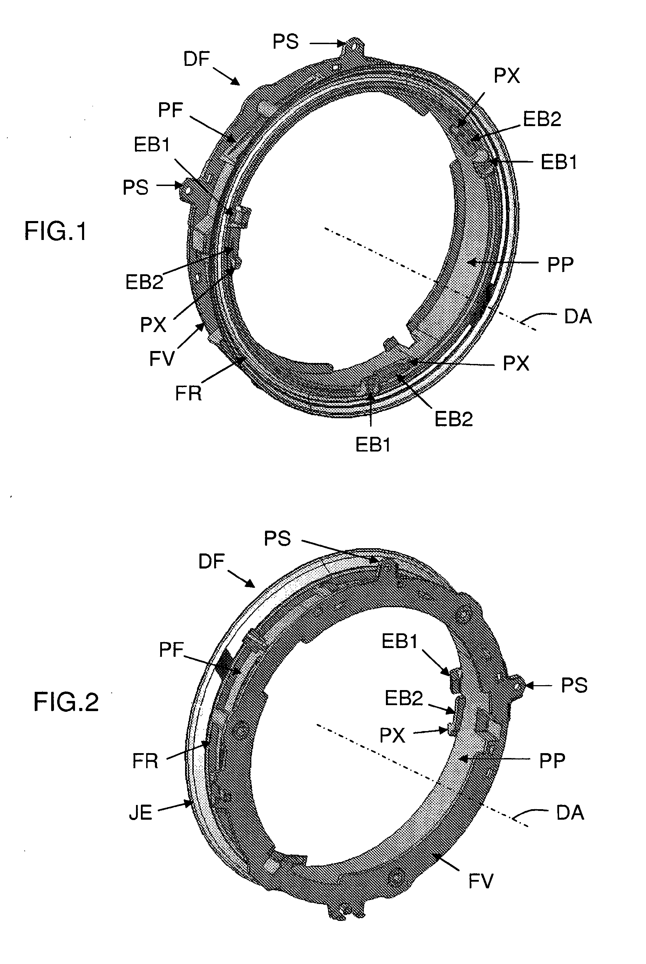

On se réfère tout d'abord aux figures 1 à 4 pour présenter un dispositif de fixation DF selon l'invention destiné à être solidarisé à une doublure de porte (ou paroi) DP. On notera que la paroi (DP) peut être réalisée en n'importe quel matériau au moins semi rigide, comme par exemple un matériau plastique ou de la tôle.

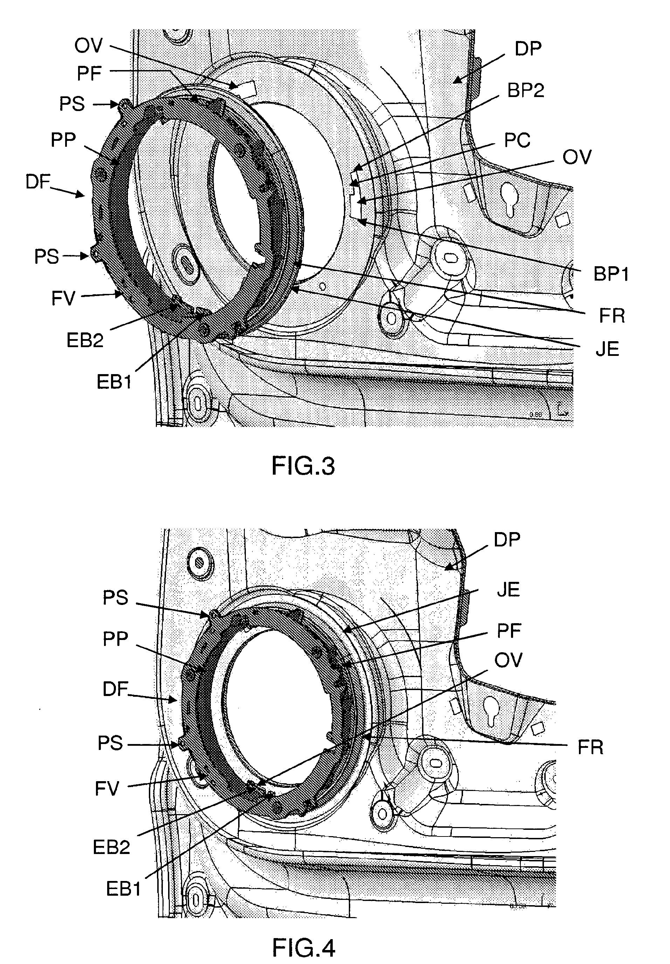

Comme illustré schématiquement sur la figure 1, un dispositif de fixation DF comprend principalement une pièce de fixation PF comportant une paroi principale PP terminée par une face dite arrière FR, destinée à être solidarisée à une paroi DP (voir figure 3), et par une face dite avant FV, opposée à la face arrière FR et destinée à permettre la fixation d'un équipement (ici un haut-parleur, non représenté).

On entend ici par « face arrière FR » une face qui est destinée à être orientée vers la paroi DP (ici une doublure de porte), et par « face avant FV » une face qui est destinée à être orientée vers le haut-parleur.

Dans l'exemple non limitatif illustré, la face avant FV comprend notamment deux pattes de fixation PS munies de trous (éventuellement filetés) destinés à permettre le passage de vis, par exemple pour immobiliser le tweeter d'un haut-parleur.

Par ailleurs, dans l'exemple non limitatif illustré, la paroi principale PP (de la pièce de fixation PF du dispositif de fixation DF) s'étend sensiblement suivant une direction axiale DA et présente une forme annulaire, et plus précisément sensiblement cylindrique circulaire.

La face arrière FR de la pièce de fixation PF comprend au moins un moyen d'immobilisation comportant des premier EB1 et second EB2 éléments de blocage.

Dans l'exemple non limitatif illustré, la pièce de fixation PF comprend trois moyens d'immobilisation EB1 et EB2 placés sensiblement à 120° les uns des autres. Mais, l'invention n'est pas limitée à ce mode de réalisation.

La distribution régulière des moyens d'immobilisation EB1 et EB2 n'est pas obligatoire. Elle est avantageuse du fait qu'elle permet une répartition homogène des efforts. Mais, on peut envisager une distribution irrégulière, par exemple dans le but de définir un moyen de détrompage facilitant la solidarisation du dispositif (de fixation) DF sur la doublure de porte DP.

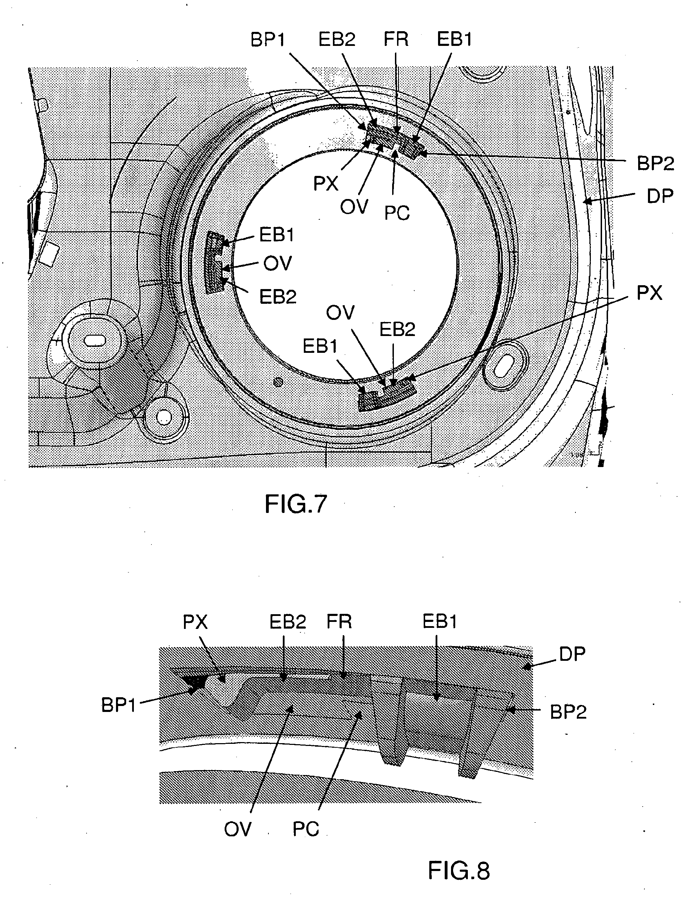

Chaque premier élément de blocage EB1 est destiné à être introduit dans une ouverture OV correspondante de la doublure de porte DP (voir figures 3 et 5 à 8), sensiblement suivant la direction axiale DA, puis à être déplacé jusqu'à une position finale (illustrée sur les figures 7 et 8) dans laquelle il encadre une partie choisie PC de la doublure de porte DP qui délimite cette ouverture OV pour assurer une immobilisation suivant la direction axiale DA.

Chaque ouverture OV comprend en effet une première partie adaptée à l'introduction d'un premier élément de blocage EB1 correspondant, et une seconde partie, prolongeant la première partie mais en présentant une largeur inférieure de manière à ne permettre que le coulissement de la partie la plus étroite de ce premier élément de blocage EB1. La partie choisie PC de la doublure de porte DP est la portion de paroi qui définit un décrochement délimitant partiellement la seconde partie de l'ouverture OV.

Par exemple, et comme illustré non limitativement, chaque premier élément de blocage EB1 comprend une première partie sensiblement perpendiculaire à la face arrière FR, et une seconde partie prolongeant la première partie à environ 90° de manière à définir avec cette dernière une espèce de L inversé. Ainsi, chaque premier élément de blocage EB1 définit avec la face arrière FR un espace de logement encadrant la partie choisie PC de la doublure de porte DP (qui délimite partiellement la seconde partie de l'ouverture OV correspondante), et donc la logeant partiellement en permettant son coulissement pendant la phase de solidarisation du dispositif DF. On comprendra en effet que la face arrière FR de la paroi de fixation PF se retrouve située en regard de la face avant de la partie choisie PC de la doublure de porte DP, tandis que la seconde partie de l'élément de blocage EB1 se retrouve située en regard de la face arrière de cette même partie choisie PC de la doublure de porte DP.

Chaque second élément de blocage EB2 est situé juste après le premier élément de blocage EB1 du moyen d'immobilisation dont il fait partie de manière à coopérer avec lui pour immobiliser son dispositif DF par auto-bloquage dans une ouverture OV correspondante de la doublure de porte DP.

Plus précisément, chaque second élément de blocage EB2 est destiné à être déplacé jusqu'à une position finale (illustrée sur les figures 7 et 8) dans laquelle il est au moins partiellement logé dans l'ouverture OV correspondante en s'appuyant sur un premier bord de paroi BP1 qui la délimite et en plaquant le premier élément de blocage EB1 sensiblement contre un second bord de paroi BP2 qui délimite cette ouverture OV et qui est opposé au premier bord de paroi BP1. On entend ici par « sensiblement contre » le fait d'être approximativement calé contre le second bord de paroi BP2.

On comprendra qu'un premier bord de paroi BP1 délimite une extrémité de la première partie d'une ouverture OV et qu'un second bord de paroi BP2 délimite une extrémité de la seconde partie de cette même ouverture OV.

Grâce à cet appui d'un second élément de blocage EB2 sur un premier bord de paroi BP1 et au calage d'un premier élément de blocage EB1 sensiblement contre un second bord de paroi BP2, le moyen d'immobilisation EB1 et EB2 se retrouve bloqué dans sa position finale dans l'ouverture (OV) et donc solidarise le dispositif DF à la doublure de porte DP. En d'autres termes chaque moyen d'immobilisation se retrouve auto-bloqué dans l'ouverture OV correspondante, aussi bien axialement qu'en rotation. En fait, chaque second élément de blocage EB2 verrouille dans l'ouverture OV le premier élément de blocage EB1 associé dans sa position finale.

Par exemple, et comme illustré sur les figures, chaque second élément de blocage EB2 peut être agencé sous la forme d'une patte comprenant des première et seconde parties d'extrémité opposées l'une à l'autre. La première partie d'extrémité est par exemple solidarisée latéralement à la face arrière FR de la pièce de fixation PF sensiblement au niveau de sa jonction avec la partie principale PP, en étant sensiblement perpendiculaire à cette dernière (PP). La seconde partie d'extrémité PX présente par exemple une protubérance qui définit une butée de blocage propre à s'appuyer sur le premier bord de paroi BP1 dans la position finale, comme illustré sur la figure 8.

Par exemple, et comme illustré sur les figures, chaque patte EB2 est solidarisée à la face arrière FR de la pièce de fixation PF de façon flexible au moins suivant la direction axiale DA. On comprendra que cette flexibilité permet de faire légèrement fléchir la patte EB2 lorsque le premier élément de blocage EB1 associé est logé et déplacé dans l'ouverture OV correspondante, puis de lui faire reprendre sa position normale (sans contrainte axiale) une fois que le premier élément de blocage EB1 parvient dans sa position finale.

Comme illustré sur les figures, afin d'offrir une étanchéité de qualité à l'interface dispositif DF / doublure de porte DP, il est avantageux de placer sur la face arrière FR de la pièce de fixation PF du dispositif DF un joint d'étanchéité JE.

Compte tenu du mode de réalisation du dispositif DF décrit ci-avant, sa solidarisation à la doublure de porte DP peut être effectuée comme suit.

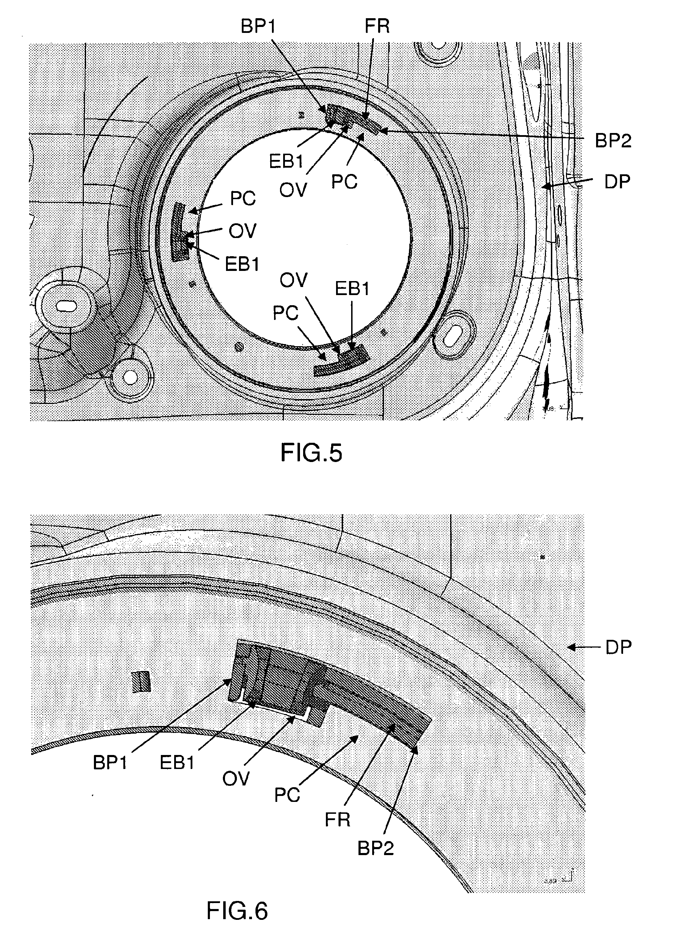

On commence par se saisir du dispositif DF, puis on place ses premiers éléments de blocage EB1 devant les premières parties des ouvertures OV correspondantes, respectivement. Ensuite, on introduit axialement (suivant DA) les premiers éléments de blocage EB1 dans les premières parties des ouvertures OV correspondantes, respectivement, jusqu'à ce que leurs secondes parties se retrouvent toutes situées au-delà de la face arrière de la doublure de porte DP. Cette phase intermédiaire est illustrée sur les figures 5 et 6. Puis, on entraîne en rotation sur quelques degrés le dispositif DF par rapport à la doublure de porte DP en faisant coulisser les parties choisies PC de cette dernière sous les secondes parties des premiers éléments de blocage EB1, afin de placer ces derniers (EB1) et les seconds éléments de blocage EB2 associés dans leur position finale (illustrée sur les figures 2, 7 et 8). Cette toute dernière opération peut être assimilée à une opération de clippage.

Lorsque l'on veut désolidariser le dispositif DF de la doublure de porte DP, on peut procéder comme suit.

On pousse les seconds éléments de blocage EB2 du côté de la face arrière de la doublure de porte DP afin de faire sortir leurs protubérances PX de leurs ouvertures OV respectives (opération de déclippage), et l'on entraîne en rotation sur quelques degrés le dispositif DF par rapport à la doublure de porte DP jusqu'à ce que les premiers éléments de blocage EB1 se retrouvent dans les premières parties des ouvertures OV. Puis, on tire axialement le dispositif DF (suivant la direction DA) afin de faire sortir les premiers éléments de blocage EB1 des premières parties des ouvertures OV.

L'invention ne se limite pas aux modes de réalisation de dispositif de fixation et porte de véhicule décrits ci-avant, seulement à titre d'exemple, mais elle englobe toutes les variantes que pourra envisager l'homme de l'art dans le cadre des revendications ci-après.

## Revendications

1. Dispositif (DF) de fixation d'un équipement, comprenant une pièce de fixation (PF) et une paroi (DP),
ladite pièce de fixation (PF) présentant une forme annulaire et étant munie sur une face dite arrière (FR) d'au moins trois moyens d'immobilisation comportant chacun i) un premier élément de blocage (EB1) destiné à être introduit dans une ouverture (OV) correspondante de ladite paroi (DP) puis à être déplacé jusqu'à une position finale dans laquelle il encadre une partie choisie (PC) de ladite paroi (DP) qui délimite ladite ouverture (OV) pour assurer une immobilisation suivant une direction axiale, **caractérisé en ce que** chacun des moyens d'immobilisation comporte ii) un second élément de blocage (EB2), situé après ledit premier élément de blocage (EB1) et destiné à être déplacé jusqu'à une position finale dans laquelle il est au moins partiellement logé dans cette même ouverture (OV) en s'appuyant sur un premier bord de paroi (BP1) qui la délimite et en plaquant ledit premier élément de blocage (EB1) sensiblement contre un second bord de paroi (BP2) qui délimite ladite ouverture (OV) et qui est opposé audit premier bord de paroi (BP1), chaque moyen d'immobilisation (EB1, EB2) étant propre à être déplacé jusqu'à sa position finale par entraînement en rotation sur quelques degrés autour de la direction axiale (DA) de la pièce de fixation (PF) bloquant ainsi ledit moyen d'immobilisation dans ladite ouverture (OV) et donc solidarisant ledit dispositif (DF) à ladite paroi (DP).

2. Dispositif selon la revendication 1, **caractérisé en ce que** les trois moyens d'immobilisation (EB1, EB2) sont placés sensiblement à 120° les uns des autres.

3. Dispositif selon la revendication 1, **caractérisé en ce que** lesdits moyens d'immobilisation (EB1, EB2) sont répartis de façon irrégulière.

4. Dispositif selon l'une des revendications 1 à 3, **caractérisé en ce que** chaque premier élément de blocage (EB1) présente une forme générale en L inversé de manière à définir avec ladite face arrière (FR) un espace de logement pour ladite partie choisie (PC) de la paroi (DP) qui délimite l'ouverture (OV) correspondante.

5. Dispositif selon l'une des revendications 1 à 4, **caractérisé en ce que** chaque second élément de blocage (EB2) est agencé sous la forme d'une patte comprenant une partie d'extrémité (PX) présentant une protubérance de manière à définir une butée de blocage propre à s'appuyer sur ledit premier bord de paroi (BP1).

6. Dispositif selon la revendication 5, **caractérisé en ce que** ladite patte (EB2) est solidarisée à ladite face arrière (FR) de la pièce de fixation (PF) de façon flexible au moins suivant ladite direction axiale.

7. Dispositif selon l'une des revendications 1 à 6, **caractérisé en ce qu'**il est agencé pour supporter un équipement constituant une partie au moins d'un haut-parleur.

8. Dispositif selon l'une des revendications 1 à 7, **caractérisé en ce qu'**il est agencé pour être solidarisé à une paroi (DP) constituant une doublure de porte de véhicule.

9. Porte de véhicule, **caractérisée en ce qu'**elle comprend une doublure de porte (DP) à laquelle est solidarisé un dispositif de fixation (DF) selon l'une des revendications précédentes.

## Patentansprüche

1. Vorrichtung (DF) zum Fixieren einer Ausrüstung, die ein Fixierungsteil (PF) und eine Wand (DP) umfasst, wobei das Fixierungsteil (PF) eine ringförmige Form aufweist und auf einer so genannten hinteren Seite (FR) mit mindestens drei Immobilisierungsmitteln versehen ist, jeweils i) ein erstes Blockierungselement (EB1), das dazu bestimmt ist, in eine entsprechende Öffnung (OV) der Wand (DP) eingeführt zu werden und dann bis zu einer Endposition verlagert zu werden, in der es einen ausgewählten Teil (PC) der Wand (DP), die die Öffnung (OV) umgibt, umrahmt, um eine Immobilisierung entlang einer axialen Richtung sicherzustellen, **dadurch gekennzeichnet, dass** jedes der Immobilisierungsmittel ii) ein zweites Blockierungselement (EB2) umfasst, das nach dem ersten Blockierungsmittel (EB1) liegt und dazu bestimmt ist, bis zu einer Endposition verlagert zu werden, in der es mindestens teilweise in derselben Öffnung (OV) aufgenommen ist, indem es sich auf einen ersten Wandrand (BP1) stützt, der sie abgrenzt, und unter Andrücken des ersten Blockierungselements (EB1) im Wesentlichen gegen einen zweiten Wandrand (BP2), der die Öffnung (OV) abgrenzt und dem ersten Wandrand (BP1) entgegengesetzt ist, wobei jedes Immobilisierungsmittel (EB1, EB2) geeignet ist, bis zu seiner Endposition durch Antreiben in Drehung auf einigen Grad um die axiale Richtung (DA) des Fixierungsteil (PF) verlagert zu werden, wobei das Immobilisierungsmittel in der Öffnung (OV) blockiert wird und daher die Vorrichtung (DF) fest mit der Wand (DP) verbindet.

2. Vorrichtung nach Anspruch 1, **dadurch gekennzeichnet, dass** die drei Immobilisierungsmittel (EB1, EB2) im Wesentlichen um 120° zueinander platziert sind.

3. Vorrichtung nach Anspruch 1, **dadurch gekennzeichnet, dass** die Immobilisierungsmittel (EB1, EB2) unregelmäßig verteilt sind.

4. Vorrichtung nach einem der Ansprüche 1 bis 3, **dadurch gekennzeichnet, dass** jedes erste Blockierungselement (EB1) eine allgemeine Form in umgekehrtem L derart aufweist, dass mit der hinteren Seite (FR) ein Aufnahmeraum für den ausgewählten Teil (PC) der Wand (DP), die die entsprechende Öffnung (OV) abgrenzt, definiert ist.

5. Vorrichtung nach einem der Ansprüche 1 bis 4, **dadurch gekennzeichnet, dass** das zweite Blockierungselement (EB2) in der Form einer Pratze eingerichtet ist, die einen Endteil (PX) umfasst, der einen Vorsprung derart aufweist, dass ein Blockierungsanschlag definiert ist, der dazu geeignet ist, sich an den ersten Wandrand (BP1) anzulegen.

6. Vorrichtung nach Anspruch 5, **dadurch gekennzeichnet, dass** die Pratze (EB2) fest mit der hinteren Seite (FR) des Fixierungsteils (PF) mindestens entlang der axialen Richtung elastisch fest verbunden ist.

7. Vorrichtung nach einem der Ansprüche 1 bis 6, **dadurch gekennzeichnet, dass** sie eingerichtet ist, um eine Ausrüstung zu tragen, die einen Teil mindestens eines Lautsprechers bildet.

8. Vorrichtung nach einem der Ansprüche 1 bis 7, **dadurch gekennzeichnet, dass** sie eingerichtet ist, um fest mit einer Wand (DP) verbunden zu werden, die eine Kraftfahrzeugtür-Innenverkleidung bildet.

9. Fahrzeugtür, **dadurch gekennzeichnet, dass** sie eine Türinnenverkleidung (DP) umfasst, mit der eine Fixierungsvorrichtung (DF) nach einem der vorhergehenden Ansprüche fest verbunden ist.

## Claims

1. An equipment fixing device (DF), including a fixing part (PF) and a wall (DP), the said fixing part (PF) having an annular shape and being provided on a face designated the rear face (FR) with at least three immobilisation means, each comprising i) a first locking element (EB1) intended to be introduced into a corresponding opening (OV) of the said wall (DP), then to be moved up to a final position in which it surrounds a selected part (PC) of the said wall (DP) which delimits the said opening (OV) to ensure an immobilisation along an axial direction, **characterized in that** each of the immobilisation means comprises ii) a second locking element (EB2), situated after the said first locking element (EB1) and intended to be moved up to a final position in which it is at least partially housed in this same opening (OV) by resting on a first wall edge (BP1) which delimits it and by placing the said first locking element (EB1) flat substantially against a second wall edge (BP2) which delimits the said opening (OV) and which is opposed to the said first wall edge (BP1), each immobilisation means (EB1, EB2) being suitable for being moved up to its final position by driving in rotation over several degrees about the axial direction (DA) of the fixing part (PF), thus locking the said immobilisation means in the said opening (OV) and therefore securing the said device (DF) to the said wall (DP).

2. The device according to Claim 1, **characterized in that** the three immobilisation means (EB1, EB2) are placed substantially at 120° to one another.

3. The device according to Claim 1, **characterized in that** the said immobilisation means (EB1, EB2) are distributed in an irregular manner.

4. The device according to one of Claims 1 to 3, **characterized in that** each first locking element (EB1) has a general inverted L shape so as to define with the said rear face (FR) a housing space for the said selected part (PC) of the wall (DP) which delimits the corresponding opening (OV).

5. The device according to one of Claims 1 to 4, **characterized in that** each second locking element (EB2) is arranged in the form of a lug including an end part (PX) having a protuberance so as to define a locking stop suitable for resting on the said first wall edge (BP1).

6. The device according to Claim 5, **characterized in that** the said lug (EB2) is secured to the said rear face (FR) of the fixing part (PF) in a flexible manner at least along the said axial direction.

7. The device according to one of Claims 1 to 6, **characterized in that** it is arranged to support equipment constituting a part at least of a loudspeaker.

8. The device according to one of Claims 1 to 7, **characterized in that** it is arranged to be secured to a wall (DP) constituting a vehicle door trim.

9. A vehicle door, **characterized in that** it includes a door trim (DP) to which is secured a fixing device (DF) according to one of the preceding claims.
